# EUROPÄISCHE PATENTANMELDUNG

(11) **EP 4 086 403 A1**
(43) Veröffentlichungstag der Anmeldung: **09.11.2022**
(21) Anmeldenummer: 22170943.9
(22) Anmeldetag: 29.04.2022
(51) Int. Cl.: E04D 7/00, C04B 41/50

(54) **GRANULATE FÜR DACHBESCHICHTUNGEN**

(30) Priorität: 03.05.2021 EP 21171758
(71) Anmelder: Amberger Kaolinwerke Eduard Kick GmbH & Co. KG, 92242 Hirschau (DE)
(72) Erfinder: Hullin, Angela, 91052 Erlangen (DE); Hofmann, Hans-Jürgen, 92546 Rottendorf (DE); Kohl, Christian, 92224 Amberg (DE)
(74) Vertreter: dompatent von Kreisler Selting Werner - Partnerschaft von Patent- und Rechtsanwälten mbB

(57) **Zusammenfassung**

Granulat für eine Dachbeschichtung, wobei das Granulat Partikel umfasst, die eine Beschichtung aufweisen, wobei die Beschichtung mindestens eine Schicht eines anorganischen Pulvers in einem Bindemittel umfasst, wobei das anorganische Pulver eine d50-Korngröße von 0,5 bis 25 µm aufweist und wobei sich auf der Beschichtung ein Hydrophobierungs- und/oder Oleophobierungsmittel befindet.

## Beschreibung

Die vorliegende Erfindung betrifft Granulate für Dachbeschichtungen.

Bitumenbasierte Dachsysteme sind in vielen Ländern, insbesondere in den USA und Kanada als Dachbeschichtung gebräuchlich. Hierzu werden meist Bitumenbahnen verwendet, die mit Granulaten bestreut sind, um deren Lebensdauer zu verlängern, diese optisch aufzuwerten und/oder diese beispielsweise trittsicher zu gestalten.

In vielen Regionen sind die so gestalteten Dachflächen starker Sonneneinstrahlung ausgesetzt, was zum einen Schädigungen der Bitumenbahn zur Folge haben kann und damit die Undichtigkeit der Dachbeschichtung und zum anderen zur deutlichen Erwärmung der darunterliegenden Räume führt. Diese müssen daher mit hohem Energieeinsatz gekühlt werden. Um die Erwärmung des Dachsystems zu vermindern, werden Bitumenbahnen eingesetzt, die einen Großteil der einfallenden Strahlung reflektieren und somit diese Erwärmung deutlich reduzieren.

EP 2 483 494 B1 (Sexauer et al.) beschreibt einen derartigen Aufbau, bei dem hydrophob beschichtetes kalziniertes Kaolin als Granulat dient.

EP 3 164 554 B1 (Hofmann et al.) beschreibt hierfür optional hydrophob beschichtete keramische Partikel.

US 2017/0158865 A1 beschreibt solar-reflektierende Partikel umfassend nicht reflektierendes Partikelsubstrat, ein anorganisches Bindemittel, ein Pigment und eine hydrophobe Beschichtung. Das Pigment dient der Erzielung einer solaren Reflexion. Ein Einfluss auf die Verankerung im Bitumen ist nicht beschrieben.

WO 2018/234942 A1 beschreibt Granulate, die z.B. als Dachbeschichtung eingesetzt werden können. Dabei wird ein nicht reflektierender Kern von ein oder mehreren Schichten umgeben, um eine solare Reflexion zu erreichen und die Oberfläche zu reduzieren.

In einigen Fällen ist eine Beschichtung der Partikel mit hydrophobierenden Stoffen üblich, was den Kontakt zur Bitumenoberfläche verschlechtert, da die Oberflächenenergie der für die Beschichtung verwendeten Substanzen nahe an der Oberflächenenergie des Bitumens liegt. Damit leidet die Fixierung der Partikel im Bitumen, so dass die Gefahr besteht, dass sich diese bei mechanischer Beanspruchung aus dem Bitumen herauslösen. Damit sinkt die Reflexion der so beschichteten Fläche in ihrer Gesamtheit.

Aufgabe der vorliegenden Erfindung ist es, ein Granulat für Dachbeschichtungen bereitzustellen, dass zumindest einige Nachteile des Standes der Technik überwindet, insbesondere die Anhaftung am Bitumen verbessert.

Gelöst wird die Aufgabe durch ein Granulat für eine Dachbeschichtung, wobei das Granulat Partikel umfasst, die eine Beschichtung aufweisen, wobei die Beschichtung mindestens eine Schicht eines anorganischen Pulvers in einem Bindemittel umfasst.

Erfindungsgemäß wird ein Granulat bereitgestellt, das sich für eine Dachbeschichtung eignet. Das Granulat umfasst Partikel. Diese Partikel weisen eine Beschichtung auf. Diese Beschichtung umfasst ein anorganisches Pulver und ein Bindemittel, dass das anorganische Pulver an die Partikel bindet.

Die zur Verbesserung der Fixierung der Partikel am Bitumen verwendete Beschichtung kann gleichzeitig die solare Reflexion erhöhen.

Als Partikel eignen sich insbesondere gebranntes Kaolin, gebrannte Mischungen aus Tonmineralen, Feldspat und Quarz, sowie gebrannte Mischungen aus Tonmineralen, Silikaten und Oxiden. Auch Mischungen der vorgenannten können gut eingesetzt werden.

Bevorzugt sind Partikel, die bereits vor der Beschichtung eine hohe solare Reflexion zeigen. Bevorzugt ist ein Wert von mindestens 80 %, gemessen gemäß ASTM Standard C 1549 wie in den Beispielen beschrieben.

Geeignete Korngrößen für die Partikel sind 0,1 bis 3 mm (d50 Korngröße). Die d50 Korngröße bedeutet, dass 50 Vol.-% der Partikel eine kleinere und 50 Vol.% eine größere Korngröße aufweisen. Solche Korngrößenverteilungen können beispielsweise durch eine Siebanalyse gemäß DIN 66165-2:2016-08 bestimmt werden.

Das anorganische Pulver, aus dem die Beschichtung gebildet wird, kann bevorzugt aus gebrannten mineralischen Pulvern, Metalloxiden, Metallhydroxiden, Sulfaten, Silikathydraten, Gläsern, Carbonaten oder Mischungen der vorgenannten bestehen.

Als Metalloxide können beispielsweise Aluminiumoxid, Eisenoxid, Magnesiumoxid, Zinkoxid oder Zirkonoxid eingesetzt werden.

Als Metallhydroxide sind beispielsweise Aluminiumhydroxid und Magnesiumhydroxid geeignet.

Geeignete Sulfate sind Bariumsulfat und Calciumsulfat.

Das anorganische Pulver hat bevorzugt eine d50 Korngröße im Bereich von 0,5 bis 25 µm.

Das anorganische Pulver liegt bevorzugt in einer Menge von 1 bis 10 Gew.-% bezogen auf das Gewicht der Granulate vor.

Bevorzugt ist auch das Bindemittel anorganisch. Geeignete Bindemittel sind insbesondere silikatische Bindemittel, insbesondere Natriumwasserglas, Kaliumwasserglas und Mischungen hiervon.

Das Bindemittel liegt bevorzugt in einer Menge von 0,3 bis 5 Gew.-% bezogen auf das Gewicht der Granulate vor.

In einigen Ausführungsformen ist es bevorzugt, dass die Beschichtung aus anorganischem Pulver und Bindemittel mehrfach aufgetragen wird. Dabei können alle Schichten den gleichen Aufbau aufweisen oder unterschiedliche Zusammensetzungen aufweisen.

In einigen Ausführungsformen weist die Beschichtung außen noch ein Hydrophobierungs- oder Oleophobierungsmittel auf. Dieses wird also auf die Beschichtung aufgetragen. Geeignete Mittel für Hydrophobierung und Oleophobierung sind siliziumhaltige Verbindungen, fluorhaltige Verbindungen oder silizium-fluorhaltige Verbindungen und Mischungen davon.

Die Hydrophobierungs- oder Oleophobierungsmittel liegen bevorzugt in einer Menge von 0,05 bis 2,0 Gew.-% bezogen auf das Gewicht der Granulate vor.

Gegenstand der Erfindung ist auch eine Dachbeschichtung, umfassend eine Bitumenschicht mit darin eingebettetem erfindungsgemäßem Granulat. Typischerweise liegt das Granulat in einer Menge von 0,5 bis 5 kg/m² Dachbeschichtung vor.

Gegenstand der Erfindung ist auch ein Verfahren zur Herstellung der erfindungsgemäßen Granulate, umfassend die Schritte
a) Bereitstellen von Partikeln
b) Vermischen der Partikel mit einem Beschichtungsmittel enthaltend ein anorganisches Pulver
c) Trocknen der Beschichtung.

Weiterhin kann es erfindungsgemäß sinnvoll sein, die Schritte b) und c) ein- oder mehrfach zu wiederholen. Unabhängig von der Frage, ob die Schritte b) oder c) wiederholt werden, kann anschließend ein Hydrophobierungs- oder Oleophobierungsmittel aufgetragen werden.

Gegenstand der Erfindung ist weiterhin die Verwendung einer Schicht eines anorganischen Pulvers in einem Bindemittel zur Verbesserung der Haftung eines Granulats an einer Bitumenschicht.

Zum Anbringen der Beschichtung auf den Partikeln eignen sich insbesondere Einmisch- und Sprühbeschichtungsverfahren. Hierbei können Pflugscharmischer, Wellenmischer, Mischtrommeln oder andere geeignete Geräte verwendet werden. Im Regelfall wird hierzu das Bindemittel mit Wasser verdünnt. Das Pulver zeigt bevorzugt eine hohe solare Reflexion.

### Figurenbeschreibung

Figur 1a) zeigt das Material vor der Beschichtung.
Figur 1b) zeigt das Material nach Beispiel 1.
Figur 1c) zeigt das Material nach Beispiel 2.
Figur 2 zeigt ein Beispiel eines Kohäsionsbruches im Bitumen.
Figur 3 zeigt ein Beispiel eines Adhäsionsbruchs im Bitumen.

Die Erfindung wird durch die nachfolgenden Beispiele näher erläutert.

### Beispiele:

In den folgenden Beispielen wird ein Granulat mit den erfindungsgemäßen Beschichtungen behandelt, deren Zusammensetzung im Patent EP 3 164 554 B1 beschrieben wurde. Sie bestehen aus einer bewusst zusammengestellten Komposition von Kaolin, Feldspat und kristalliner Kieselsäure in Form von Quarz in den Verhältnissen 64:28:8 Gew-%.

### Beispiel 1

Als Verankerungsschicht wurde eine Dispersion, welche 30 Gew.-% kalziniertes Kaolin mit einem mittleren Korndurchmesser d50 von 7 µm (gemessen mit Sedigraph 5120 unter Anwendung der in der Zellcheming-Vorschrift V/27.3/90 beschriebenen Methode) verwendet. Das eingesetzte Produkt wird als AS 45 / 10.000 von Amberger Kaolinwerke Eduard Kick GmbH & Co.KG, Hirschau vertrieben. Als anorganisches Bindemittel diente Natrium-Wasserglas (37 °BE=Grad Baume) in wässriger Verdünnung von 1:5. Es wurden davon pro Beschichtungsdurchgang 1,8 Gew-% aufgetragen (Trockenmasse kalziniertes Kaolin bezogen auf Granulat), also 6 Gew-% der Dispersion bezogen auf das Granulat.

Zusammensetzung der Dispersion:
- 30 Gew.-% AS 45/10.000
- 11,7 Gew.-% Na-Wasserglas (37 °BE)
- 58,3 Gew.-% Wasser.

Es wurde dreifach mit Zwischentrocknung beschichtet.

| | unbeschichtet | 1 X beschichtet | 2 X beschichtet | 3 X beschichtet |
|---|---|---|---|---|
| Reflexion | 81,7 % | 82,0 % | 82,8 % | 82,9 % |

Die Reflexion wird dabei gemäß ASTM Standard C 1549 "standard test method for determination of solar reflection near ambient temperature using a portable solar reflectometer" bestimmt. Ein geeignetes Messgerät ist von der Firma Devices and Services, 2835 Virgo Ln., Dallas, TX 75229 unter der Bezeichnung Solar Spectrum Reflectometer Model SSR erhältlich.

### Beispiel 2

Als Verankerungsschicht wurde eine Dispersion, welche 30 Gew.-% Aluminiumoxid mit einem mittleren Korndurchmesser d50 von 4 µm (gemessen mit Sedigraph 5120) verwendet. Aluminiumoxid ist unter der Bezeichnung "Nabalox TC 115" erhältlich bei der Nabaltec GmbH, Schwandorf. Als anorganisches Bindemittel dient Natrium-Wasserglas (37 °BE) in wässriger Verdünnung von 1:5. Es wurde im Beispiel dreifach mit Zwischentrocknung beschichtet, wobei jeweils 1,8 Gew.-% Aluminiumoxid bezogen auf das Granulat verwendet wurden

Zusammensetzung der Lösung:
- 30 Gew.-% Nabalox TC 115
- 11,7 Gew.-% Na-Wasserglas (37 °BE)
- 58,3 Gew.-% Wasser.

| | unbeschichtet | 1 X beschichtet | 2 X beschichtet | 3 X beschichtet |
|---|---|---|---|---|
| Reflexion | 81,7 % | 82,1 % | 82,8 % | 82,8 % |

### Beispiel 3

Als Verankerungsschicht wurde eine Dispersion, welche 20 Gew.-% kalziniertes Kaolin mit einem mittleren Korndurchmesser d50 von 0,9 µm (gemessen mit Sedigraph 5120) verwendet. Dieses kalzinierte Kaolin ist unter dem Namen "Ansilex 93" von BASF OY, Helsinki erhältlich. Als anorganisches Bindemittel dient Natrium-Wasserglas (37 °BE) in wässriger Verdünnung von 1:5. Es wird in diesem Beispiel dreifach mit Zwischentrocknung beschichtet. Pro Beschichtungsvorgang werden hier 1,2 % Ansilex 93 bezogen auf das Granulat verwendet.

Zusammensetzung der Lösung:
- 20 Gew.-% Ansilex 93
- 13,3 Gew.-% Na-Wasserglas (37 °BE)
- 66,7 Gew.-% Wasser.

| | unbeschichtet | 1 X beschichtet | 2 X beschichtet | 3 X beschichtet |
|---|---|---|---|---|
| Reflexion | 81,7 % | 81,8 % | 82,6 % | 82,7 % |

Diese Ergebnisse zeigen, dass die Beschichtung in der Lage ist, die Reflexion nochmals zu erhöhen.

Damit ist die erste Teilaufgabe erfüllt; die Reflexion wird durch die Beschichtung nicht verschlechtert bzw. verbessert.

### Analysen

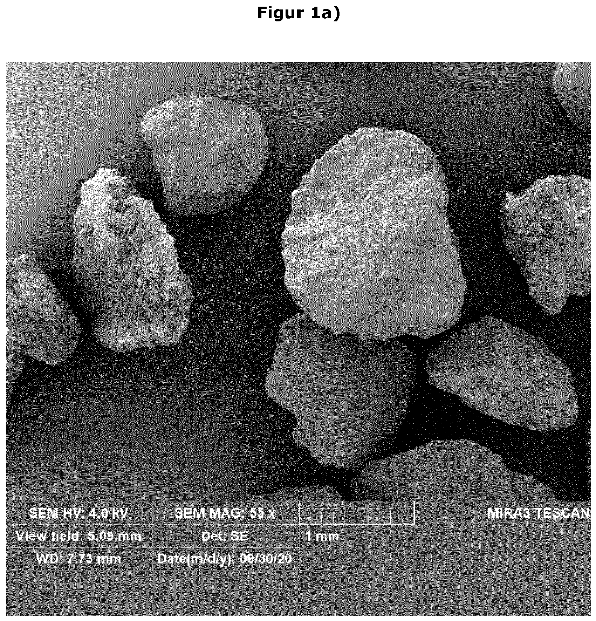

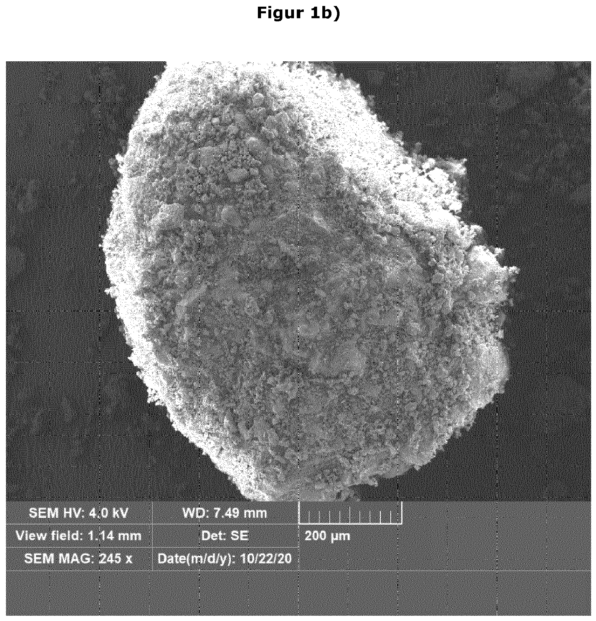

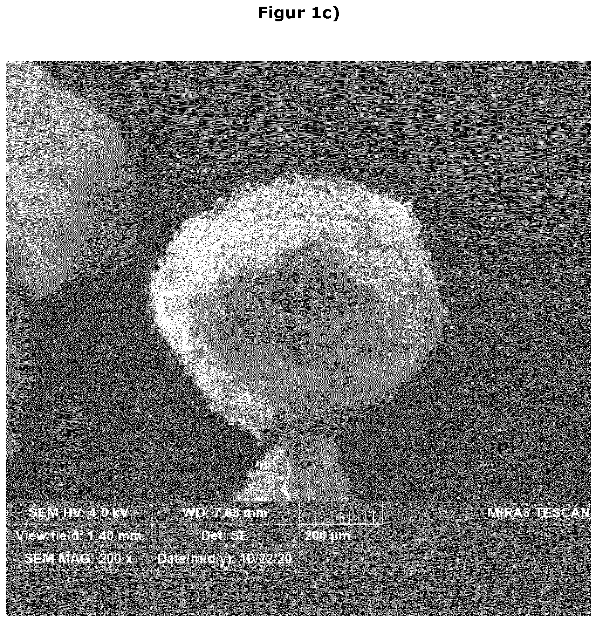

Von Beispiel 1 und Beispiel 2 wurden REM-Aufnahmen angefertigt, die die Veränderung der Oberflächentopographie durch die Beschichtung aufzeigen. An diesen ist klar zu erkennen, dass die Beschichtung eine Veränderung der Struktur bewirkt; die relativ glatten Bruchflächen werden durch die Anlagerung der Partikel in der Beschichtung deutlich rauer, siehe Figur 1 a) bis 1 c).

### Beispiel 4

Die in den Beispielen 1- 3 erhaltenen Systeme erhielten dann als (n+1)-Schicht eine hydro- und oleophobierend wirkende weitere Schicht. Diese besteht aus einer wässrigen Verdünnung [1:5 mit Wasser] aus gleichen Anteilen eines Silans (Silres BS 1001 von Wacker, Burghausen) und einer fluorhaltigen Verbindung (Unidyne TG 8111, Daikin). Pro Beschichtungsdurchgang wurden 50 mg Dispersion pro g Granulat aufgetragen.

### Beispiel 5

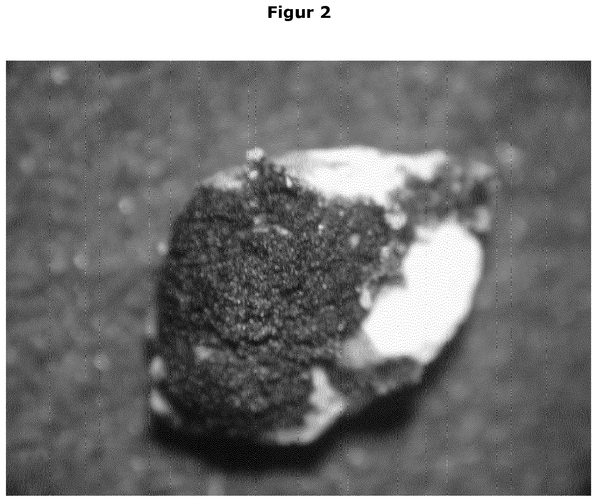

Zur Überprüfung der Fixierung wurden die so beschichteten Produkte des Beispiels 4 in eine Bitumen-Matrix eingebettet. Diese wird dazu kurzzeitig auf 200 °C erhitzt. Die eingebetteten Granulate verblieben für eine Aushärtezeit von 24 Stunden unter 80 °C gelagert. Nach Abkühlen auf Raumtemperatur wurden die Granulate mittels einer Pinzette aus der Matrix herausgerissen. Beurteilt wurde, ob es sich dabei um einen (gewünschten) Kohäsionsbruch der Bitumenschicht oder einen weniger festen Adhäsionsbruch handelt. Beim Kohäsionsbruch bricht die Bitumenschicht, bevor der Partikel von der Bitumenschicht abgelöst wird. Hierbei handelt es sich um einen Bruchverlauf in dem Bereich des Bitumens, der nicht von der Phasengrenze beeinflusst wird. Ein derartiger Bruch ist ein sehr gutes Anzeichen für eine qualitativ hochwertige Klebung, siehe Figur 2.

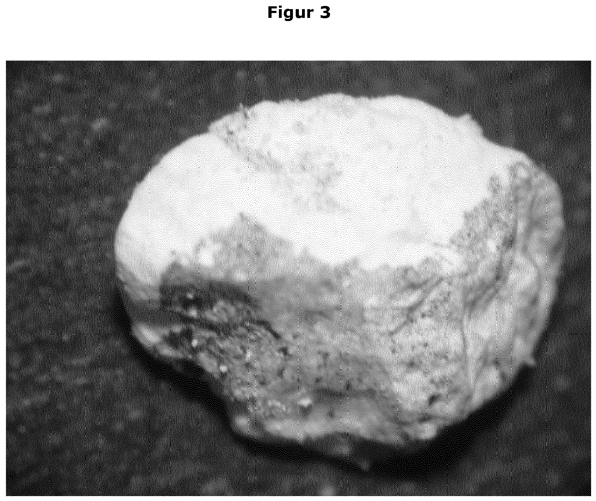

Beim Adhäsionsbruch bleibt die Bitumenschicht im Wesentlichen unverletzt. Ein Adhäsionsbruch ist ein Bruch, der entlang der Phasengrenzfläche zwischen Partikel und Bitumen verläuft. Es kommt bei dieser Bruchart zu einer vollständigen Trennung des Partikels von der Bitumenschicht. Da diese idealisierte Form des Bruches in der Praxis praktisch niemals auftritt, werden sehr dünne Anhaftungen des Bitumens auch als Adhäsionsbruch bezeichnet, auch wenn in diesem Fall strenggenommen von einem "nahezu 100%igen Adhäsionsbruch" gesprochen werden muss, siehe Figur 3.

Im Folgenden werden Partikel, die beim Entfernen aus der Bitumenschicht brechen (Kohäsionsbruch im Fugeteil), als ausreichend gut fixiert betrachtet. Diese Gruppe bildet zusammen mit den Kohäsionsbrüchen den Zahlenwert für die gewünschte gute Fixierung.

Als Referenz dient ein Granulat, welches lediglich die hydro- und oleophobierende Beschichtung erhalten hat.

| | Adhäsionsbruch | Kohäsionsbruch | |
|---|---|---|---|
| | | im Partikel | im Bitumen |
| Referenz + hydro/oleophob beschichtet | 86 % | 7 % | 7 % |
| Beispiel 1 Kalziniertes Kaolin d50= 7 µm + hydro/oleophob | 20 % | 13 % | 67 % |
| Beispiel 2 Aluminiumoxid + hydro/oleophob | 13 % | 20 % | 67 % |
| Beispiel 3 kalziniertes Kaolin d50=0,9 µm + hydro/oleophob | 13 % | 60 % | 27 % |
| Referenz, vollständig unbeschichtet | 0 % | 53 % | 47 % |

Die erhaltenen Daten zeigen, dass die Fixierung durch die Beschichtung merklich verbessert wird.

## Patentansprüche

1. Granulat für eine Dachbeschichtung, wobei das Granulat Partikel umfasst, die eine Beschichtung aufweisen, wobei die Beschichtung mindestens eine Schicht eines anorganischen Pulvers in einem Bindemittel umfasst, wobei das anorganische Pulver eine d50-Korngröße von 0,5 bis 25 µm aufweist und wobei sich auf der Beschichtung ein Hydrophobierungs- und/oder Oleophobierungsmittel befindet.

2. Granulat für eine Dachbeschichtung nach Anspruch 1, wobei die Partikel ausgewählt sind aus gebranntem Kaolin, gebrannten Mischungen aus Tonmineralen, Feldspat und Quarz, gebrannten Mischungen aus Tonmineralen, Silikaten und Oxiden und Mischungen hiervon, bevorzugt wobei die Partikel vor der Beschichtung eine solare Reflexion von mindestens 80 % aufweisen.

3. Granulat für eine Dachbeschichtung nach Anspruch 1 oder 2, wobei die Partikel eine d50-Korngröße von 0,1 bis 3 mm aufweisen.

4. Granulat für eine Dachbeschichtung nach einem der Ansprüche 1 bis 3, wobei das anorganische Pulver ausgewählt wird aus gebrannten mineralischen Pulvern, Metalloxiden, Metallhydroxiden, Sulfaten, Silikathydraten, Gläsern, Carbonaten, Glimmer und Mischungen hiervon.

5. Granulat für eine Dachbeschichtung nach einem der Ansprüche 1 bis 4, wobei das anorganische Pulver eine d50-Korngröße von 0,5 bis 10 µm aufweist.

6. Granulat für eine Dachbeschichtung nach einem der Ansprüche 1 bis 5, wobei das Bindemittel anorganisch ist.

7. Granulat für eine Dachbeschichtung nach einem der Ansprüche 1 bis 6, wobei das Bindemittel ein silikatisches Bindemittel ist.

8. Granulat für eine Dachbeschichtung nach einem der Ansprüche 1 bis 7, wobei die Beschichtung mehrfach aufgetragen wird.

9. Granulat für eine Dachbeschichtung nach einem der Ansprüche 1 bis 8, wobei die Menge an anorganischem Pulver von 1 bis 10 Gew.-% bezogen auf das Gewicht der Granulate beträgt.

10. Granulat für eine Dachbeschichtung nach Anspruch 9, wobei das Hydrophobierungs- oder Oleophobierungsmittel siliziumhaltige Verbindungen, fluorhaltige Verbindungen oder silizium-fluorhaltige Verbindungen und Mischungen davon umfasst.

11. Dachbeschichtung umfassend eine Bitumenschicht mit darin eingebettetem Granulat nach einem der Ansprüche 1 bis 10.

12. Dachbeschichtung nach Anspruch 11, wobei das Granulat in einer Menge von 0,5 bis 5 kg pro Quadratmeter Dachbeschichtung vorliegt.

13. Verfahren zur Herstellung von Granulat für eine Dachbeschichtung nach einem der Ansprüche 1 bis 10 umfassend die Schritte:
a) Bereitstellen von Partikeln
b) Vermischen der Partikel mit einem Beschichtungsmittel enthaltend ein anorganisches Pulver
c) Trocknen der Beschichtung
d) optional wiederholen der Schritte b) und c) und/oder
e) Aufbringen eines Hydrophobierungs- und/oder Oleophobierungsmittels.

14. Verwendung einer Schicht eines anorganischen Pulvers in einem Bindemittel zur Verbesserung der Haftung eines Granulats an einer Bitumenschicht, wobei das anorganische Pulver eine d50-Korngröße von 0,5 bis 25 µm aufweist.
